# EUROPÄISCHE PATENTSCHRIFT

(11) **EP 2 036 792 B1**
(45) Veröffentlichungstag und Bekanntmachung des Hinweises auf die Patenterteilung: **12.06.2013**
(21) Anmeldenummer: 08015902.3
(22) Anmeldetag: 10.09.2008
(51) Int. Cl.: B60T 13/68, B60T 15/04

(54) **Feststellbremsanlage für ein Nutzfahrzeug**
Hand brake for a commercial vehicle
Installation d'un frein de stationnement pour un véhicule utilitaire

(30) Priorität: 13.09.2007 DE 102007043570
(43) Veröffentlichungstag der Anmeldung: 18.03.2009
(73) Patentinhaber: KNORR-BREMSE Systeme für Nutzfahrzeuge GmbH, 80809 München (DE)
(72) Erfinder: Kaupert, Oliver, 80995 München (DE)
(74) Vertreter: Mattusch, Gundula

(56) Entgegenhaltungen:
- EP-A- 0 111 778
- WO-A-01/85509
- US-A- 4 572 319
- US-A- 5 533 795
- US-A- 5 839 304
- US-A1- 2003 221 922

## Beschreibung

Die Erfindung betrifft eine Feststellbremsanlage für ein Nutzfahrzeug.

Bremsanlagen von Nutzfahrzeugen arbeiten vielfach mit Druckluft. Die Druckluft wird von einem mit dem Antriebsmotor des Kraftfahrzeugs gekoppelten beziehungsweise koppelbaren Kompressor an eine Luftaufbereitungsanlage geliefert. Die Luftaufbereitungsanlage stellt häufig eine Vielzahl von Funktionalitäten zur Verfügung, so zum Beispiel die Lufttrocknung und Luftreinigung, die Druckregelung und die Verteilung der Druckluft auf die verschiedenen Verbraucherkreise mittels einer Mehrkreisschutzventileinrichtung. Moderne Luftaufbereitungsanlagen sind vielfach mit einer elektronischen Steuereinheit ausgestattet, die im Rahmen zahlreicher dieser Funktionen steuernden beziehungsweise regelnden Einfluss nimmt.

Ein wichtiger Bestandteil der Bremsanlage des Nutzfahrzeugs ist die Feststellbremse. Zur Bedienung der Feststellbremse ist im Fahrerhaus vielfach ein Handbremsventil angeordnet, wobei durch die Betätigung des Handbremsventils Federspeicherzylinder, die vorzugsweise der Hinterachse des Nutzfahrzeugs zugeordnet sind, belüftet beziehungsweise entlüftet werden können. Im entlüfteten Zustand der Federspeicherzylinder ist das Nutzfahrzeug gebremst, während die Feststellbremse durch Belüften der Federspeicherzylinder gelöst werden kann. Die Belüftung und die Entlüftung der Feststellbremse erfolgen über ein Relaisventil, das mit einem Druckluftvorrat und den Federspeicherzylindern in Verbindung steht, wobei ein Steuereingang des Relaisventils von dem Handbremsventil angesteuert wird.

Ohne weitere Vorkehrungen kann es bei pneumatischen Feststellbremsanlagen zu problematischen Szenarien kommen. Es ist beispielsweise denkbar, dass ein Fahrer den Motor seines drucklosen Fahrzeugs startet und sogleich das Handbremsventil in eine Stellung bringt, mit der der Steuereingang des Relaisventils belüftet werden könnte und somit auch die Federspeicherzylinder in ihren belüfteten Zustand überführt werden könnten. Da das Fahrzeug jedoch in diesem Moment noch drucklos ist, wird die Feststellbremse nicht gelöst. Fällt es dem Fahrer in dem Moment ein, das Führerhaus zu verlassen, beispielsweise um die Scheiben des Fahrzeugs von Eis zu befreien, so baut sich der Druck im Fahrzeug nach und nach auf, wobei dieser dann irgendwann auch ausreichend ist, um die Feststellbremse zu lösen. Das Fahrzeug kann somit bei unbesetztem Führerhaus in Bewegung geraten, was zu gefährlichen Situationen führen kann.

Insbesondere in Ländern Nordeuropas ist es Vorschrift, Nutzfahrzeuge mit Sicherheitseinrichtungen auszustatten, die ein Lösen der Feststellbremse bei unbesetztem Führerhaus vermeiden. In der DE 103 41 723 A1 sind Möglichkeiten angegeben, wie diese Sicherheitsfunktion - die so genannte Northland Park Brake Function - zur Verfügung gestellt werden kann. Es ist beispielsweise vorgesehen, ein die Feststellbremsanlage versorgendes Überströmventil mit einem Steuereingang auszustatten, wobei durch Belüften des Steuereingangs das Überströmventil in einen Sperrzustand überführt wird. Der Steuereingang des Überströmventils ist nun mit einem Magnetventil gekoppelt, welches das Belüften und das Entlüften des Steuereingangs in Abhängigkeit seiner Ansteuerung durch eine elektronische Steuereinheit bewerkstelligt. Gleichzeitig wird der elektronischen Steuereinheit Information darüber zur Verfügung gestellt, ob sich der Fahrer im Führerhaus befindet, beispielsweise auf der Grundlage eines Sitzsensors, eines Gurtanlegesensors oder eines Pedalbetätigungssensors, so dass ein Druckaufbau in der Feststellbremsanlage durch Sperren des Überströmventils so lange verhindert werden kann, wie sich der Fahrer nicht im Führerhaus befindet. Gleichzeitig kann ein Befüllen der Feststellbremsanlage auch noch so lange verhindert werden, wie der in den Betriebsbremskreisen gemessene Druck eine gewisse Druckschwelle noch nicht überschritten hat, nämlich den für die so genannte Hilfsbremswirkung erforderlichen Betriebsbremsdruck. Dieses Konzept ist nützlich und zuverlässig, wobei jedoch zu beachten ist, dass das sperrbare Überströmventil auch die Anhängerbremsanlage mit Druckluft versorgt. Mit Freigabe des Überströmventils und somit der nachfolgenden Befüllung der Anhängerbremsanlage sinkt der Druck im System also wieder ab und nachfolgend nach und nach bei kontinuierlicher Nachförderung von Druckluft wieder an. Der Fahrer muss unter Umständen also noch längere Zeit auf das Lösen der Feststellbremse warten, obwohl aufgrund der sicherheitsrelevanten Überschreitung der Hilfsbremsdruckschwelle eine Warndruckmeldung bereits erloschen ist und sich das Handbremsventil in seinem geöffneten Zustand befindet. Dies ist mitunter für den Fahrer nicht nachvollziehbar, oder er vermutet sogar einen Defekt der Bremsanlage.

In der US 5,533,795 A wird eine Vorrichtung zum automatischen Einlegen der Feststellbremse bzw. dem Halten einer Feststellbremse in ihrem geschlossenen Zustand wenn der Fahrzeugführer seinen Sitz verlässt beschrieben.

Der Erfindung liegt die Aufgabe zugrunde, eine Feststellbremsanlage zur Verfügung zu stellen, die das Lösen der Feststellbremse bei abwesendem Fahrer sicher verhindert und die Vorgänge im Nutzfahrzeug für den Fahrzeugführer in nachvollziehbarer Weise ablaufen lässt.

Diese Aufgabe wird mit den Merkmalen des unabhängigen Anspruchs gelöst.

Vorteilhafte Ausführungsformen der Erfindung sind in den abhängigen Ansprüchen angegeben.

Die Erfindung besteht in einer Feststellbremsanlage für ein Nutzfahrzeug, mit einem Handbremsventil, einem Relaisventil, das einen von dem Handbremsventil pneumatisch ansteuerbaren Steuereingang, einen mit einem Druckluftvorrat des Nutzfahrzeugs verbundenen Arbeitseingang und einen mit mindestens einem Federspeicherzylinder verbundenen Arbeitsausgang aufweist, einer elektronischen Steuereinheit und einer zwischen dem Handbremsventil und dem Steuereingang des Relaisventils angeordneten, von der elektronischen Steuereinheit elektrisch schaltbaren Ventileinrichtung, wobei bei Anwesenheit einer Person zur Führung des Nutzfahrzeugs ein von der elektronischen Steuereinheit elektrisch auswertbarer Indikator zur Verfügung stellbar ist und wobei die elektronische Steuereinheit geeignet ist, mittels der elektrisch schaltbaren Ventileinrichtung ein Belüften des mindestens einen Federspeicherzylinders zu verhindern, wenn der Indikator nicht vorliegt. Die Ventileinrichtung, welche den Steuerdruck des Handbremsventils wahlweise wirksam an den Steuereingang des Relaisventils weitergibt oder diese Weitergabe sperrt, nimmt somit ausschließlich einen Einfluss auf die Feststellbremsanlage. Der im Zusammenhang mit dem Stand der Technik geschilderte unerwartete Effekt eines Druckabfalls, der ein Spannen der Feststellbremse bei erloschener Warnlampe und offenem Handbremsventil bewirkt, ist somit also ausgeschlossen.

Nützlicherweise ist vorgesehen, dass die Ventileinrichtung ein 2/2-Wegeventil ist. Ein 2/2-Wegeventil ist ausreichend für die geforderte Funktionalität, nämlich das Sperren beziehungsweise das Freigeben für die Belüftung oder die Entlüftung des Relaisventil-Steuereingangs bei entsprechender Betätigung des Handbremsventils.

Es ist bevorzugt, dass die Ventileinrichtung im stromlosen Zustand das Handbremsventil mit dem Steuereingang des Relaisventils pneumatisch verbindet und im bestromten Zustand das Handbremsventil von dem Steuereingang des Relaisventils pneumatisch trennt. Wird das Nutzfahrzeug in Betrieb genommen, so wird die Ventileinrichtung zunächst bestromt, so dass sicherheitshalber in jedem Fall eine Belüftung der Federspeicherzylinder verhindert wird. Erst wenn dann die sicherheitsrelevanten Überwachungsfunktionen der elektronischen Steuereinheit gegriffen haben, ist es möglich, die Ventileinrichtung in ihren stromlosen Zustand zu überführen, so dass über das Relaisventil die Federspeicherzylinder belüftet werden können.

Es ist weiterhin von besonderem Vorteil, dass ein mit der elektronischen Steuereinheit elektrisch gekoppelter Drucksensor zum Erfassen eines druckluftvorratsseitigen Druckes vorgesehen ist, wobei die elektronische Steuereinheit geeignet ist, mittels der elektrisch schaltbaren Ventileinrichtung ein Belüften des mindestens einen Federspeicherzylinders zu verhindern, wenn ein von dem Drucksensor erfasster Druck unterhalb eines Druckschwellenwertes liegt. Zusätzlich zur Anwesenheitsprüfung kann somit auch eine Drucküberwachung vorgenommen werden und im Zusammenhang mit der zwischen Handbremsventil und Steuereingang des Relaisventils angeordneten Ventileinrichtung nützlich zum Einsatz gebracht werden. Die erfindungsgemäße Feststellbremsanlage kann also auch in der Weise betrieben werden, dass ein Belüften des Relaisventilsteuereingangs nur dann möglich ist, wenn zwei Bedingungen erfüllt sind, nämlich der Hilfsbremsdruck in den Betriebsbremskreisen erreicht ist und der Fahrer anwesend ist.

Die Erfindung ist in besonders nützlicher Weise dadurch weitergebildet, dass das Relaisventil und/oder die Ventileinrichtung und/oder der Drucksensor und/oder die elektronische Steuereinheit in eine elektronische Luftaufbereitungsanlage integriert sind. Es sind also hochintegrierte Lösungen möglich.

Die Erfindung wird nun mit Bezug auf die begleitende Zeichnung anhand einer besonders bevorzugten Ausführungsform beispielhaft erläutert.

Es zeigt:

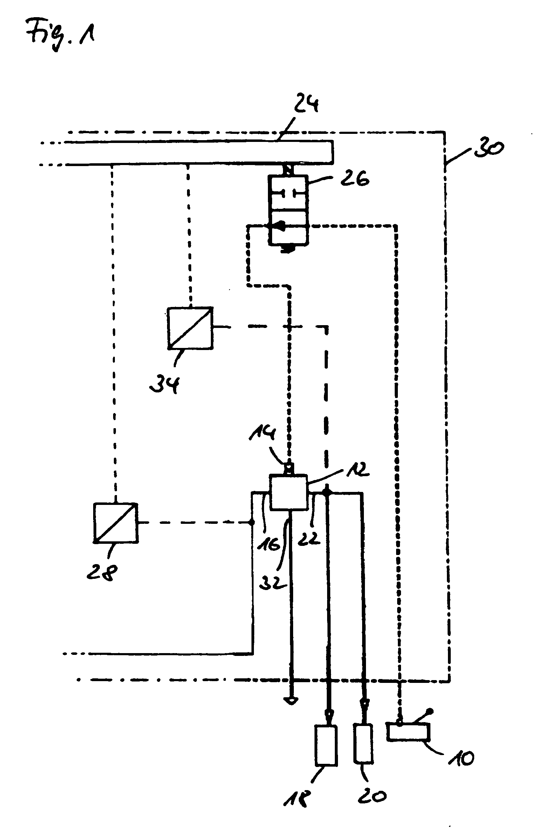

- Figur 1: einen Teil einer Luftaufbereitungsanlage mit einer darin teilweise integrierten erfindungsgemäßen Feststellbremsanlage.

Die Luftaufbereitungsanlage 30 kann, insbesondere im Hinblick auf die nicht dargestellten Komponenten, beispielsweise so aufgebaut sein, wie es in der bereits im Zusammenhang mit der Beschreibung des Standes der Technik zitierten DE 103 41 723 A1 beschrieben ist. Unterschiede bestehen im Zusammenhang mit der Auslegung der Feststellbremsanlage. Diese weist als zentrale Baugruppen ein meist im Führerhaus angeordnetes Handbremsventil 10 und ein von diesem Handbremsventil ansteuerbares Relaisventil 12 auf. Das Relaisventil 12 hat für diese Zwecke einen Steuereingang 14. Weiterhin ist das Relaisventil 12 mit einem Arbeitseingang 16 und einem Arbeitsausgang 22 ausgestattet, wobei der Arbeitseingang 16 mit einem nicht dargestellten Druckluftvorrat in Verbindung steht. Das Relaisventil 12 hat weiterhin einen Entlüftungsausgang 32. Der Arbeitsausgang 22 des Relaisventils 12 ist mit Federspeicherzylindern 18, 20 verbunden, die vorzugsweise der Hinterachse des Nutzfahrzeugs zugeordnet sind. Weitere Anschlüsse am Arbeitsausgang 22 des Relaisventils 12 können einem Anhängersteuermodul des Nutzfahrzeugs zugeführt werden, um auf diese Weise die Bremsfunktionen des Anhängersteuermoduls ebenfalls beeinflussen zu können. Es sind zwei Drucksensoren 28, 34 vorgesehen, wobei der erste Drucksensor 28 einen versorgungsseitigen Druck und der zweite Drucksensor 34 einen den Federspeicherzylindern 18, 20 zugeordneten Druck erfasst. Die Drucksensoren 28, 34 geben ihre Werte an eine elektronische Steuerung 24 weiter, welche zur Steuerung zahlreicher Vorgänge innerhalb der Luftaufbereitungsanlage 30 vorgesehen ist und an die insbesondere ein 2/2-Wegemagnetventil 26 angeschlossen ist. Dieses 2/2-Wegemagnetventil ist im stromlosen Zustand geöffnet, und es verbindet das Handbremsventil 10 mit dem Steuereingang 14 des Relaisventils 12.

Die dargestellte Anlage arbeitet wie folgt. Wird das Nutzfahrzeug in Betrieb genommen, so schaltet die elektronische Steuerung 24 das Magnetventil 26 um, so dass es die Verbindung zwischen dem Handbremsventil 10 und dem Steuereingang 14 des Relaisventils 12 sperrt. Folglich kann ein Druckaufbau im Nutzfahrzeug erfolgen, ohne dass die Federspeicherzylinder 18, 20 belüftet werden könnten. Es wird dann erfasst, ob ein Fahrer des Nutzfahrzeugs anwesend ist. Dies kann beispielsweise über einen Sitzsensor, einen Sicherheitsgurtsensor oder einen Pedalsensor, der beispielsweise dem Bremspedal zugeordnet ist, erfolgen. Ist der Fahrer anwesend und ist insbesondere weiterhin auch der druckluftversorgungsseitige Druck, der von dem Drucksensor 28 erfasst wird, in einem Bereich, bei dem die Hilfsbremswirkung des Betriebsbremssystems zur Verfügung steht, kann das Magnetventil 26 in seinen stromlosen Zustand überführt werden; folglich wird die Verbindung zwischen dem Handbremsventil 10 und dem Steuereingang 14 des Relaisventils 12 freigegeben. Durch Betätigen des Handbremsventils 10 kann nun der Steuereingang 14 des Relaisventils 12 belüftet werden. Folglich können die Federspeicherzylinder 18, 20 belüftet werden, wodurch die Feststellbremse gelöst wird.

Im Zusammenhang mit der Beschreibung von Figur 1 wurde ausgeführt, dass die Funktionen der Feststellbremsanlage von der elektronischen Steuereinheit 24 einer Luftaufbereitungsanlage 30 gesteuert werden können. Ebenfalls ist es aber möglich, andere Steuergeräte des Nutzfahrzeugs für diese Funktion vorzusehen, beispielsweise ein ABS-Steuergerät, oder es ist auch möglich, für die beschriebenen Vorgänge ein eigenes Steuergerät vorzusehen, das beispielsweise in der Form eines einzigen Moduls mit der Ventileinrichtung 26 und dem Relaisventil 12 baulich vereinigt ist.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

| | |
|---|---|
| 10 | Handbremsventil |
| 12 | Relaisventil |
| 14 | Steuereingang |
| 16 | Arbeitseingang |
| 18 | Federspeicherzylinder |
| 20 | Federspeicherzylinder |
| 22 | Arbeitsausgang |
| 24 | elektronische Steuerung |
| 26 | 2/2-Wegemagnetventil |
| 26 | Ventileinrichtung |
| 26 | Magnetventil |
| 28 | Drucksensor |
| 30 | Luftaufbereitungsanlage |
| 32 | Entlüftungsausgang |
| 34 | Drucksensor |

## Patentansprüche

1. Feststellbremsanlage für ein Nutzfahrzeug, mit
- einem Handbremsventil (10),
- einem Relaisventil (12), das einen von dem Handbremsventil pneumatisch ansteuerbaren Steuereingang (14), einen mit einem Druckluftvorrat des Nutzfahrzeugs verbundenen Arbeitseingang (16) und einen mit mindestens einem Federspeicherzylinder (18, 20) verbundenen Arbeitsausgang (22) aufweist,
- einer elektronischen Steuereinheit (24) und
- einer zwischen dem Handbremsventil (10) und dem Steuereingang (14) des Relaisventils (12) angeordneten, von der elektronischen Steuereinheit elektrisch schaltbaren Ventileinrichtung (26),
- wobei bei Anwesenheit einer Person zur Führung des Nutzfahrzeugs ein von der elektronischen Steuereinheit (24) elektrisch auswertbarer Indikator zur Verfügung stellbar ist und
- wobei die elektronische Steuereinheit (24) geeignet ist, mittels der elektrisch schaltbaren Ventileinrichtung (26) ein Belüften des mindestens einen Federspeicherzylinders (18, 20) zu verhindern, wenn der Indikator nicht vorliegt.

2. Feststellbremsanlage nach Anspruch 1, **dadurch gekennzeichnet, dass** die Ventileinrichtung ein 2/2-Wegeventil (26) ist.

3. Feststellbremsanlage nach Anspruch 1 oder 2, **dadurch gekennzeichnet, dass** die Ventileinrichtung (26) im stromlosen Zustand das Handbremsventil (10) mit dem Steuereingang (14) des Relaisventils (12) pneumatisch verbindet und im bestromten Zustand das Handbremsventil (10) von dem Steuereingang (14) des Relaisventils (12) pneumatisch trennt.

4. Feststellbremsanlage nach einem der vorhergehenden Ansprüche, **dadurch gekennzeichnet, dass** ein mit der elektronischen Steuereinheit (24) elektrisch gekoppelter Drucksensor (28) zum Erfassen eines druckluftvorratsseitigen Druckes vorgesehen ist, wobei die elektronische Steuereinheit (24) geeignet ist, mittels der elektrisch schaltbaren Ventileinrichtung (26) ein Belüften des mindestens einen Federspeicherzylinders (18, 20) zu verhindern, wenn ein von dem Drucksensor (28) erfasster Druck unterhalb eines Druckschwellenwertes liegt.

5. Feststellbremsanlage nach einem der vorhergehenden Ansprüche, **dadurch gekennzeichnet, dass** das Relaisventil (12) und/oder die Ventileinrichtung (26) und/oder der Drucksensor (28) und/oder die elektronische Steuereinheit (24) in eine elektronische Luftaufbereitungsanlage (30) integriert sind.

## Claims

1. Parking brake assembly for a utility vehicle, having
- a hand brake valve (10),
- a relay valve (12) which comprises a control input (14) that can be pneumatically controlled by the hand brake valve, a work input (16) connected to a compressed air supply of the utility vehicle and a work output (22) connected to at least one spring-loaded cylinder (18, 20),
- an electronic control unit (24) and
- a valve device (26) arranged between the hand brake valve (10) and the control input (14) of the relay valve (12) and which can be electrically switched by the electronic control unit,
- wherein if a person is present to guide the utility vehicle an indicator which can be electrically evaluated by the electronic control unit (24) can be made available and
- wherein the electronic control unit (24) is adapted to prevent, by means of the electrically switchable valve device (26), a ventilation of the at least one spring-loaded cylinder (18, 20) if the indicator is not present.

2. Parking brake assembly according to claim 1, **characterised in that** the valve device is a 2/2 way valve (26).

3. Parking brake assembly according to claim 1 or 2, **characterised in that** the valve device (26), in the non-energised state, pneumatically connects the hand brake valve (10) to the control input (14) of the relay valve (12) and, in the energised state, pneumatically separates the hand brake valve (10) from the control input (14) of the relay valve (12).

4. Parking brake assembly according to one of the preceding claims, **characterised in that** a pressure sensor (28) electrically coupled to the electronic control unit (24) is provided to detect a compressed-air-supply-side pressure, wherein the electronic control unit (24) is adapted, by means of the electrically switchable valve device (26), to prevent ventilation of the at least one spring-loaded cylinder (18, 20) if a pressure detected by the pressure sensor (28) lies below a pressure threshold value.

5. Parking brake assembly according to one of the preceding claims, **characterised in that** the relay valve (12) and / or the valve device (26) and / or the pressure sensor (28) and / or the electronic control unit (24) are integrated into an electronic air preparation system (30).

## Revendications

1. Système de stationnement pour un véhicule utilitaire comprenant
- un robinet (10) de frein à main,
- une vanne (12) relais, qui a une entrée (14) de commande pouvant être commandée pneumatiquement par le robinet de frein à main, une entrée (16) de travail communiquant avec un réservoir d'air comprimé du véhicule utilitaire et une sortie (22) de travail communiquant avec au moins un cylindre (18, 20) à ressort accumulateur,
- une unité (24) électronique de commande et
- un dispositif (26) de vanne, qui est disposé entre le robinet (10) de frein à main et l'entrée (14) de commande de la vanne (12) relais et qui peut être commuté électriquement par l'unité électronique de commande,
- dans lequel, en la présence d'une personne pour la conduite du véhicule utilitaire, un indicateur pouvant être exploité électriquement par l'unité (24) électronique de commande est mis à disposition de manière réglable et
- dans lequel l'unité (24) électronique de commande est propre à empêcher, au moyen du dispositif (26) de vanne pouvant être commuté électriquement, une alimentation en air du au moins à un cylindre (18, 20) à ressort accumulateur, si l'indicateur n'est pas présent.

2. Système de frein de stationnement suivant la revendication 1, **caractérisé en ce que** le dispositif de vanne est une vanne (26) à 2/2 voies.

3. Système de frein de stationnement suivant la revendication 1 ou 2, **caractérisé en ce que** le dispositif (26) de vanne communique pneumatiquement à l'état sans courant du robinet (10) de frein à main avec l'entrée (14) de commande de la vanne (12) relais et à l'état alimenté en courant le robinet (10) de frein à main sépare pneumatiquement l'entrée (14) de commande de la vanne (12) relais.

4. Système de frein de stationnement suivant l'une des revendications précédentes, **caractérisé en ce qu'**il est prévu à un capteur (28) de pression, couplé électriquement à l'unité (24) électronique de commande, pour la détection d'une pression du côté du réservoir d'air comprimé, l'unité (24) électronique de commande étant propre à empêcher, au moyen du dispositif (26) de vanne pouvant être commuté électriquement, une alimentation en air du au moins un cylindre (18, 20) à ressort accumulateur lorsqu'une pression détectée par le capteur (28) de pression est inférieure à une valeur de seuil de la pression.

5. Système de frein de stationnement suivant l'une des revendications précédentes, **caractérisé en ce que** la vanne (12) relais et/ou le dispositif (26)de vanne et/ou le capteur (28) de pression et/ou l'unité (24) électronique de commande sont intégrés dans un système (30) électronique de préparation d'air.
